# NEW EUROPEAN PATENT SPECIFICATION

(11) **EP 0 486 034 B2**
(45) Date of publication and mention of the opposition decision: **12.03.2003**
(45) Mention of the grant of the patent: 14.01.1998
(21) Application number: 91119479.3
(22) Date of filing: 14.11.1991
(51) Int. Cl.: C08G 18/10, C08J 9/02

(54) **Flexible polyurethane foams and process for preparing them**
Flexible Polyurethanschaumstoffe und Verfahren zu ihrer Herstellung
Mousses flexibles de polyuréthane et leur procédé de préparation

(30) Priority: 16.11.1990 IT 2209190
(43) Date of publication of application: 20.05.1992
(73) Proprietor: Dow Poliuretani Italia S.r.l., 20151 Milano (IT)
(72) Inventor: Lunardon, Gianflavio, I-35139 Padova (IT); Stefani, Dario, I-35135 Padova (IT)
(74) Representative: Geary, Stephen

(56) References cited:
- EP-A- 0 331 941
- EP-A- 0 344 551
- DD-A- 206 674
- GB-A- 2 021 605
- US-A- 3 862 879
- US-B- 4 478 960
- US-B- 4 668 708

## Description

The present invention relates to flexible polyurethane foams and to a process for preparing them.

Particularly, the present invention relates to flexible polyurethane foams obtainable by means of a process which does not involve the use of secondary foaming agents of the chlorofluoroalkane type, but the use of carbon dioxide formed in situ, and to the corresponding process.

The technique for producing polyurethane foams is known since long: it comprises the reaction of polyether polyols and/or polyester polyols with polyisocyanates in the presence of catalysts, foaming agents, cell-regulating surtactants, stabilizers and other auxiliary agents.

The polyether polyols presently utilized for producing flexible polyurethane foams are prepared by condensing one or more alkylene oxides on compounds having at least two activated hydrogen atoms, such as glycols, triols, tetrols, amines and mixtures thereof.

The most widely utilized alkylene oxides are ethylene oxide and propylene oxide, which are used either alone or in admixture.

IT-A-20542/89 corresponding to EP-A-0 398 304 which is a document according to Art. 54(3) and (4) EPC describes the preparation of flexible polyurethane foams by means of a process which does not require the use of chlorofluoroalkane foaming agents. More in particular, the above application describes flexible polyurethane foams having densities ranging from 15 to 60 kg/m³ and a bearing capacity, at 40% compression according to ISO 2439, ranging from 50 to 150 N, prepared by using only carbon dioxide as foaming agent. According to said patent application, foams having the above-mentioned characteristics can be prepared by reacting an isocyanate prepolymer of aromatic or cycloaliphatic nature and having a content of free NCO groups of from 10 to 45% by weight, with a polyether polyol obtained from the condensation of propylene oxide and ethylene oxide and having an ethylene oxide content of from 10 to 90% by weight.

US-A-4668708 discloses elastic polyurethane flexible foams prepared by using only water as foaming agent which produces carbondioxide in situ. The densities of the foams obtained are between 33 and 39 g/l.

GB-A-2 021 605 relates to a method for the preparation of polyurethane foams and to polyurethane foams prepared by this method. As a foaming agent, for example trichlorofluormethane is used. The use of carbon dioxide as a foaming agent is not described.

Furthermore, US-A-3 862 879 relates to polyurethane foams prepared by mechanically inducing an inert gas into the urethane-foaming composition. However, the densities of the foams are relatively high, the lowest density being described corresponding to 176 kg/m³.

Finally, EP-A-0 331 941 is mentioned as general technological background which also describes a method to produce polyurethane foams however, without using carbon dioxide as a foaming agent.
It has now been found that it is possible to increase the bearing capacity of flexible polyurethane foams having densities of from 15 to 21.2 kg/m³ to values higher than 150 N, i.e. starting from 151 N, still not using chlorofluoroalkane foaming agents, if a polyether polyol having an ethylene oxide content of not more than (and preferably lower than) 50% by weight and a particular molecular weight is used as polyurethane reagent.
Thus, the present invention provides flexible polyurethane foams having densities from 15 to 21,2 kg/m³ and a bearing capacity of higher than 150 N according to standard ISO 2439 at 40% of compression, obtainable by reacting, in the presence of a foaming agent consisting of carbon dioxide formed in situ, a modified polyisocyanate (A) and a compound (B) containing activated terminal hydrogen atoms, the modified polyisocyanate (A) having a free NCO group content of from 10 to 45% by weight and having been obtained from the partial polymerization of an organic polyisocyanate having an isocyanate functionality of at least 2 with at least one polyether polyol having an average molecular weight ranging from about 500 to about 8,000 and a hydroxyl functionality of from 2 to 4, and said compound (B) comprising mixtures of water and at least one polyether polyol obtained from the polycondensation of propylene oxide and, optionally, ethylene oxide on compounds (starters) having at least two activated hydrogen atoms, the amount of water ranging from 1 to 8 parts by weight per 67.5 parts by weight of polyol and having an ethylene oxide content of from 0 to 50% by weight, a hydroxyl functionality ranging from 2 to 4 and an equivalent weight per terminal hydroxyl group ranging from 500 to 2,500; provided that when said polyether polyol of compound (B) has an ethylene oxide content of from 0 to <10% by weight its equivalent weight ranges from 500 to 2,500, while when its ethylene oxide content ranges from 10 to 50% by weight its equivalent weight ranges from 1,000 to 1,500, wherein the equivalent ratio of modified polyisocyanate (A) and compound (B) ranges from 0.8 to 1.2.
According to the present invention, the foaming agent consists only of carbon dioxide formed in situ, while the equivalent ratio between modified polyisocyanate (A) and compound (B) preferably ranges from 0.95 to 1.15.

Any organic polyisocyanate capable of providing polyurethane foams can be utilized in the present invention, although aromatic and cycloaliphatic polyisocyanates and the corresponding alkyl-substituted derivatives are preferred.

In particular it is possible to utilize low molecular weight diisocyanates of general formula (I):

OCN-R-NCO (I)

wherein R represents a cycloalipnatic or aromatic radical, optionally alkyl-substituted, having 5 to 25 carbon atoms Specific examples of compounds of general formula (I) are meta- and para-phenylene diisocyanate, 2.4-toluene diisocyanate, either alone or in admixture with its 2,6-isomer, 4,4'-diphenylmethane diisocyanate. optionally in admixture with its 2,4'-isomer, 4,4'-dicyclohexylmethane diisocyanate, 1-isocyanato-3-isocyanatomethyl-3,3,5-trimethylcyclohexane (or isophorone diisocyanate), etc.

The preferred diisocyanate of general formula (I) is 2,4-toluene diisocyanate, either alone or in admixture with (preferably at least 20% by weight) of 2,6-toluene diisocyanate.

Undistilled or crude toluene diisocyanate, i.e. a partially purified toluene diisocyanate withdrawn from any tray of the distillation column can usually be utilized.

Alternatively, it is possible to utilize medium and/or high molecular weight polyisocyanates having different condensation degrees and being obtainable from the phosgenation of aniline-formaldehyde condensates. These products are composed of mixtures of polymethylene-polyphenylene-polyisocyanates of general formula (II): 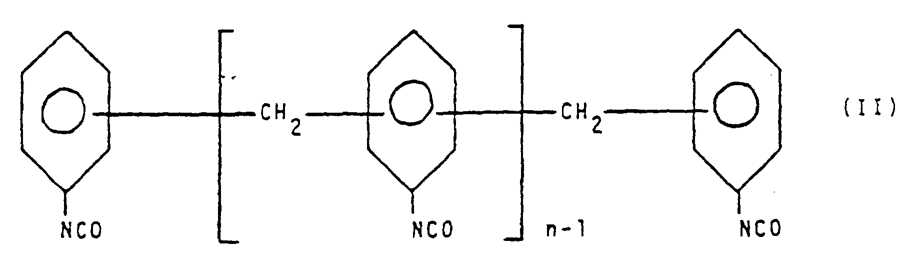 where n represents an integer higher than or equal to 1.

Preferred medium and high molecular weight polyisocyanates of formula (II) are the mixtures of polymethylene-polyphenylene-polyisocyanates having an average functionality of 2.6 to 2.8; these products are marketed under various trade names such as "Tedimon^{(R)} 31" (Montedipe), "Suprasec^{(R)} DNR" (I.C.I.) and "Desmodur^{(R)}44 V20" (Bayer).

The compounds (B) containing activated terminal hydrogen atoms to be used in the preparation of the polyurethane foams of the present invention preferably comprise mixtures of water and polyols obtained by the condensation of propylene oxide, optionally in the presence of ethylene oxide.

The condensation is made to occur on compounds (starters) having at least two activated hydrogen atoms, such as glycols, triols, tetrols, etc., aminés, alkanolamines, polyamines and mixtures thereof.

Representative examples of polyether polyols to be utilized according to the present invention in the compound (B) are those which are terminated by propylene oxide and/or ethylene oxide units and in which the starter is a glycol such as dipropylene glycol, a triol such as glycerol or trimethylolpropane, a tetrol such as pentaerythritol, a diamine such as ethylene diamine, an alkanolamine such as triethanolamine, etc., or mixtures of two or more of the above compounds.

These polyols can be utilized as such or they can contain polymeric particles, either dispersed therein or partially grafted onto the polyol chains, said polymeric particles preferably having sizes below 20 um. Examples of suitable polymers for preparing these particles are polyacrylonitrile, polystyrene, polyvinyl-chloride, etc., or mixtures or copolymers thereof, or polymers based on urea such as the "Polyhamstoff-Dispersionen" or "PHD Polyole" of the company Bayer.

Likewise, the polyether polyols utilized for preparing the modified polyisocyanate (A) to be used in the preparation of the foams of the present invention may be obtained from the polycondensation of olefin oxides having 2 to 6 carbon atoms (e.g. propylene oxide and/or ethylene oxide) on a starter as described above.

In particular it is preferred to use polyether polyols containing propylene oxide units either alone or in admixture with ethylene oxide units (preferably in amounts higher than 4% by weight).

Both the polyether polyols utilized in the compounds (B) and the polyether polyols utilized in the preparation of the modified polyisocyanates (A) are preparable by means of processes which are known to those skilled in the art and described, for example, in Saunders and Frisch,-"Polyurethanes, Chemistry and Technology", Interscience, New York, 1964.

In the preparation of the polyurethane foams of the present invention, the amount of water which can be used in the compound (B) is critical, as water gives rise to the generation of carbon dioxide, which causes the foaming of the polyurethane resin. Water amounts ranging from 1 to 8 parts by weight, preferably from 1.5 to 6 parts by weight, with respect to 67.5 parts of polyol contained in said compound (B) are used.

According to the present invention, the foaming agent utilized for the polyurethane resin is the carbon dioxide formed in situ by the chemical reaction between water and the free NCO groups of the modified Polyisocyanate (A).

The flexible polyurethane foams of the present invention may be prepared by means of a two-step process which comprises:
(a) reacting a polyisocyanate (preferably a polyisocyanate of general formulae (I) and/or (II)) with at least one polyether polyol having an average molecular weight ranging from about 500 to about 8,000, preferably from about 1,000 to about 6,000, and a hydroxyl functionality ranging from 2 to 4 in order to prepare a modified polyisocyanate (A) having a free NCO group content ranging from 10 to 45% by weight, preferably from 15 to 40% by weight, and
(b) reacting the modified polyisocyanate (A) of step (a) with a compound (B) containing activated terminal hydrogen atoms and comprising mixtures of water and at least one polyether polyol obtained from the polycondensation of propylene oxide and, optionally, ethylene oxide on compounds (starters) having at least two activated hydrogen atoms, the amount of water ranging from 1 to 8 parts by weight per 67.5 parts by weight of polyol and having an ethylene oxide content of from 0 to 50% by weight, a hydroxyl functionality ranging from 2 to 4 and an equivalent weight per terminal hydroxyl group ranging from 500 to 2,500, the carbon dioxide formed in situ foaming the reaction product polyurethane;
   provided that when the polyether polyol of the compound (B) has an ethylene oxide content of from 0 to <10% by weight, preferably from 0 to 9.9%, its equivalent weight ranges from 500 to 2,500, while when its ethylene oxide content ranges from 10 to 50% by weight, preferably from 10 to 25%, its equivalent weight ranges from 1,000 to 1,500,
wherein the equivalent ratio of modified polyisocyanate (A) and compound (B) ranges from 0.8 to 1.2.

Carbon dioxide formed in situ is used as foaming agent in the above process.

The reactions of step (a) are generally conducted at a temperature of from about 50 to about 90°C without catalyst, while the reactions of step (b) are usually conducted at room temperature and in the presence of amine catalysts, such as triethylene diamine, and/or metal catalysts such as stannous octoate, and other additives such as cell modifiers, thermo-oxidation stabilizers, pigments, etc.

The flexible polyurethane foams of the present invention have a density ranging from 15 to 21.2 kg/m³, and a bearing capacity at 40% of compression, according to ISO 2439, higher than 150 N, generally starting from 151 up to 300 N, and therefore they are endowed with characteristics such as to meet, on the one hand, the requirements of the furniture, furnishing and automotive industry, etc., which require foams having the above physical properties while, on the other hand, they do not involve the use of foaming agents such as chlorofluoroalkanes, which are harmful for the environment.

The following examples are given to better illustrate but not to limit the present invention.

The amounts of the various components of the formulations are expressed as parts by weight, unless otherwise specified.

### EXAMPLE 1

A modified polyisocyanate having a free NCO group content of about 27% was prepared by reacting 58.3 parts of toluene diisocyanats (2,4-to 2,6-isomer ratio equal to 80/20) with 41.7 parts of a trifunctional polyether polyol having an average molecular weight of 3,500 and having been prepared by polymerization of ethylene oxide (X) and propylene oxide (Y) on glycerol with X/Y ratios of 10/90.

90.7 parts of the modified polyisocyanate (A) so obtained were reacted with 5.4 parts of water and with 67.5 parts of a trifunctional polyether polyol having an average molecular weight equal to 3,500 and an OH number equal to 48 mg KOH/g, obtained by condensation of propylene oxide on glycerol.

The mixture of modified polyisocyanate and polyether polyol/water was reacted according to known techniques in the presence of a catalyst (triethylene diamine and stannous octoate) and a silicone surfactant, was stirred for a few seconds and then was utilized for preparing flexible foamed products having a density of about 18.5 g/l, a bearing capacity at 40% of compression, according to ISO 2439, of about 170 N, an elongation at break of 320% and a permanent set index (according to ISO 1856) of 4%. No thermal degradation effects were observed on the final foam.

### EXAMPLE 2

92 parts of the modified polyisocyanate (A) of example 1 were reacted with 4.7 parts of water and with 67.5 parts of a polyether polyol derived from propylene oxide and having a functionality of 3.5, an average molecular weight of 3,500 and an OH number of 56.

There were obtained flexible foamed products having a density of about 21.2 g/l, a bearing capacity, at 40% of compression according to ISO 2439, of about 200 N, an elongation at break of 300% and a permanent set index of 3.2%. No thermal degradation effects were observed on the foam.

### EXAMPLE 3 (comparative test)

58.3 parts of toluene diisocyanate containing 20% by weight of 2,6-isomer were reacted with 5.4 parts of water and 109.2 parts of trifunctional polyether polyol having an average molecular weight of 3,500 and an OH numer equal to 48 (the same as used in example 1) in the presence of triethylene diamine, stannous octoate and a silicone surfactant. A flexible foam having a density of 19.5 g/l was obtained, which, however, exhibited evident scorching phenomena.

5 parts of foaming agent CFC 11 were then added to the reacting polyurethane mixture in order to obtain a foamed product having the same density as the foam of example 1 and without scorching, a bearing capacity of 110 N, an elongation at break of 240% and a permanent set index of 4.6%.

## Claims

1. Flexible polyurethane foams having densities from 15 to 21,2 kg/m³ and a bearing capacity of higher than 150 N according to standard ISO 2439 at 40% of compression, obtainable by reacting, in the presence of a foaming agent consisting of carbon dioxide formed in situ, a modified polyisocyanate (A) and a compound (B) containing activated terminal hydrogen atoms, the modified polyisocyanate (A) having a free NCO group content of from 10 to 45% by weight and having been obtained from the partial polymerization of an organic polyisocyanate having an isocyanate functionality of at least 2 with at least one polyether polyol having an average molecular weight ranging from about 500 to about 8,000 and a hydroxyl functionality of from 2 to 4, and said compound (B) comprising mixtures of water and at least one polyether polyol obtained from the polycondensation of propylene oxide and, optionally, ethylene oxide on compounds (starters) having at least two activated hydrogen atoms, the amount of water ranging from 1 to 8 parts by weight per 67.5 parts by weight of polyol and having an ethylene oxide content of from 0 to 50% by weight, a hydroxyl functionality ranging from 2 to 4 and an equivalent weight per terminal hydroxyl group ranging from 500 to 2,500; provided that when said polyether polyol of compound (B) has an ethylene oxide content of from 0 to <10% by weight its equivalent weight ranges from 500 to 2,500, while when its ethylene oxide content ranges from 10 to 50% by weight its equivalent weight ranges from 1,000 to 1,500, wherein the equivalent ratio of modified polyisocyanate (A) and compound (B) ranges from 0.8 to 1.2.

2. Polyurethane foams according to claim 1, wherein the equivalent ratio of modified polyisocyanate (A) and compound (B) ranges from 0.95 to 1.15.

3. Polyurethane foams according to any one of claims 1 to 2, wherein the organic polyisocyanate is selected from diisocyanates of general formula (I):
OCN-R-NCO (I)
wherein R represents a cycloaliphatic or aromatic radical, optionally alkyl-substituted, having from 5 to 25 carbon atoms; and from medium and/or high molecular weight products having different condensation degrees, obtainable from the phosgenation of aniline-formaldehyde condensates and being composed of mixtures of polymethylene-polyphenylene-polyisocyanates of general formula (II): 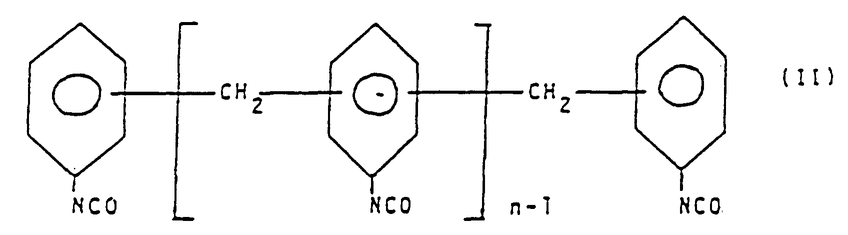 wherein n is at least 1.

4. Polyurethane foams according to claim 3, wherein the organic polyisocyanate is 2,4-toluene diisocyanate, either a such or in admixture with preferably at least 20% by weight of 2,6-isomer.

5. Polyurethane foams according to any one of the preceding claims, wherein the polyether polyols utilized for preparing the modified polyisocyanate (A) have been obtained from the polycondensation of C₂-C₆ olefin oxides on compounds having at least two activated hydrogen atoms.

6. Process for preparing the polyurethane foams according to any one of the preceding claims, comprising:
(a) reacting a polyisocyanate of general formula (I) or (II) with at least one polyether polyol having an average molecular weight of from about 500 to about 8,000 and a hydroxyl functionality of from 2 to 4, in order to prepare a modified polyisocyanate (A) having a content of free NCO groups of from 10 to 45% by weight; and
(b) reacting the modified polyisocyanate (A) of step (a) with a compound (B) containing activated terminal hydrogen atoms and comprising mixtures of water and at least one polyether polyol obtained from the polycondensation of propylene oxide and, optionally, ethylene oxide on compounds (starters) having at least two activated hydrogen atoms, the amount of water ranging from 1 to 8 parts by weight per 67.5 parts by weight of polyol and having an ethylene oxide content of from 0 to 50% by weight, a hydroxyl functionality ranging from 2 to 4 and an equivalent weight per terminal hydroxyl group ranging from 500 to 2,500, the carbon dioxide formed in situ foaming the reaction product polyurethane; provided that when the polyether polyol of compound (B) has an ethylene oxide content ranging from 0 to <10% by weight, its equivalent weight ranges from 500 to 2,500, while when its ethylene oxide content ranges from 10 to 50% by weight its equivalent weight ranges from 1,000 to 1,500, wherein the equivalent ratio of modified polyisocyanate (A) and compound (B) ranges from 0.8 to 1.2.

7. Process according to claim 6, wherein the reactions of step (a) are conducted at a temperature of from about 50 to about 90°C without catalyst, and/or the reactions of step (b) are conducted at room temperature and in the presence of amine and/or metal catalysts, cell regulators, thermo-oxidation stabilizers and/or pigments.

8. Use of the polyurethane foams according to any one of claims 1 to 5 in the furniture, furnishing and transportation industries.

## Patentansprüche

1. Flexible Polyurethanschäume mit Dichten von 15 bis 21,2 kg/m³ und einer Tragfähigkeit von mehr als 150 N, gemäß dem Standard ISO 2439 bei einer Kompression von 40%, erhältlich durch Umsetzen in Gegenwart eines Schaumbildners, welcher aus in situ gebildetem Kohlendioxid besteht, eines modifizierten Polyisocyanats (A) und einer Verbindung (B), welche aktivierte endständige Wasserstoffatome enthält, wobei das modifizierte Polyisocyanat (A) einen Gehalt an freien NCO-Gruppen von 10 bis 45 Gew.-% besitzt und aus der teilweisen Polymerisation eines organischen Polyisocyanats mit einer Isocyanatfunktionalität von mindestens 2 mit mindestens einem Polyetherpolyol mit einem mittleren Molekulargewicht von ungefähr 500 bis ungefähr 8000 und einer Hydroxylfunktionalität von 2 bis 4 erhalten worden ist, und wobei die Verbindung (B) Mischungen aus Wasser und mindestens einem Polyetherpolyol umfaßt, welches erhalten wird aus der Polykondensation von Propylenoxid und gegebenenfalls Ethylenoxid an Verbindungen (Startern) mit mindestens zwei aktivierten Wasserstoffatomen, wobei die Menge an Wasser von 1 bis 8 Gewichtsteilen pro 67,5 Gewichtsteilen an Polyol reicht und mit einem Ethylenoxidgehalt von 0 bis 50 Gew.-%, einer Hydroxylfunktionalität von 2 bis 4 und einem Äquivalentgewicht pro endständiger Hydroxylgruppe von 500 bis 2500; vorausgesetzt, daß wenn das Polyetherpolyol der Verbindung (B) einen Ethylenoxidgehalt von 0 bis <10 Gew.-% besitzt, sein Äquivalentgewicht von 500 bis 2500 reicht, während wenn sein Ethylenoxidgehalt von 10 bis 50 Gew.-% reicht, sein Äquivalentgewicht von 1000 bis 1500 reicht, wobei das Äquivalentverhältnis von modifiziertem Polyisocyanat (A) und Verbindung (B) von 0,8 bis 1,2 reicht.

2. Polyurethanschäume gemäß Anspruch 1, wobei das Äquivalentverhältnis von modifiziertem Polyisocyanat (A) und Verbindung (B) von 0,95 bis 1,15 reicht.

3. Polyurethanschäume gemäß einem der Ansprüche 1 bis 2, wobei das organische Polyisocyanat aus Diisocyanaten der allgemeinen Formel (I) :
OCN-R-NCO (I)
ausgewählt ist, wobei R für einen cycloaliphatischen oder aromatischen Rest steht, gegebenenfalls Alkylsubstituiert, mit 5 bis 25 Kohlenstoffatomen; und aus Produkten mit mittlerem und/oder hohem Molekulargewicht mit verschiedenen Kondensationsgraden, erhältlich aus der Phosgenierung von Anilin-Formaldehyd-Kondensaten und zusammengesetzt aus Mischungen von Polymethylen-Polyphenylen-Polyisocyanaten der allgemeinen Formel (II): 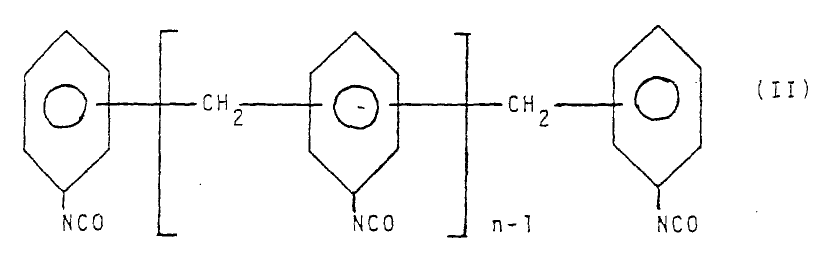 wobei n mindestens 1 ist.

4. Polyurethanschäume gemäß Anspruch 3, wobei das organische Polyisocyanat 2,4-Toluoldiisocyanat ist, entweder als solches oder in einer Mischung mit vorzugsweise mindestens 20 Gew.-% an 2,6-Isomer.

5. Polyurethanschäume gemäß einem der vorhergehenden Ansprüche, wobei die für die Herstellung des modifizierten Polyisocyanats (A) verwendeten Polyole aus der Polykondensation von C₂-C₆-Olefinoxiden an Verbindungen mit mindestens 2 aktivierten Wasserstoffatomen erhalten werden.

6. Verfahren zur Herstellung der Polyurethanschäume gemäß einem der vorhergehenden Ansprüche, umfassend:
(a) Umsetzen eines Polyisocyanats der allgemeinen Formel (I) oder (II) mit mindestens einem Polyetherpolyol mit einem mittleren Molekulargewicht von ungefähr 500 bis ungefähr 8000 und einer Hydroxylfunktionalität von 2 bis 4, um ein modifiziertes Polyisocyanat (A) mit einem Gehalt an freien NCO-Gruppen von 10 bis 45 Gew.-% herzustellen; und
(b) Umsetzen des modifizierten Polyisocyanats (A) aus Schritt (a) mit einer Verbindung (B), welche aktivierte endständige Wasserstoffatome enthält und Mischungen aus Wasser und mindestens einem Polyetherpolyol umfaßt, welches erhalten wird aus der Polykondensation von Propylenoxid und gegebenenfalls Ethylenoxid an Verbindungen (Startern) mit mindestens zwei aktivierten Wasserstoffatomen, wobei die Menge an Wasser von 1 bis 8 Gewichtsteilen pro 67,5 Gewichtsteilen an Polyol reicht und mit einen Gehalt an Ethylenoxid von 0 bis 50 Gew.-%, einer Hydroxylfunktionalität von 2 bis 4 und einem Äquivalentgewicht pro endständiger Hydroxylgruppe von 500 bis 2500, wobei das in situ gebildete Kohlendioxid das Reaktionsprodut Polyurethan aufschäumt; vorausgesetzt, daß wenn das Polyetherpolyol der Verbindung (B) einen Ethylenoxidgehalt von 0 bis <10 Gew.-% besitzt, sein Äquivalentgewicht von 500 bis 2500 reicht, während wenn sein Ethylenoxidgehalt von 10 bis 50 Gew.-% reicht, sein Äquivalentgewicht von 1000 bis 1500 reicht, wobei das Äquivalentverhältnis von modifiziertem Polyisocyanat (A) und Verbindung (B) von 0,8 bis 1,2 reicht.
7. Verfahren gemäß Anspruch 6, wobei die Umsetzungen im Schritt (a) bei einer Temperatur von ungefähr 50 bis ungefähr 90°C ohne Katalysator durchgeführt werden, und/oder die Umsetzungen im Schritt (b) bei Raumtemperatur und in Gegenwart von Amin- und/oder Metallkatalysatoren, Zell-Reglersubstanzen, Thermooxidationsstabilisatoren und/oder Pigmenten durchgeführt werden.
8. Verwendung der Polyurethanschäume gemäß einem der Ansprüche 1 bis 5 in der Möbel-, Einrichtungs- und Transportindustrie.

## Revendications

1. Mousses souples en polyuréthane, qui ont une masse volumique de 15 à 21,2 kg/m³ et peuvent supporter une charge supérieure à 150 N à un taux de compression de 40 %, selon la norme ISO 2439, et que l'on peut obtenir en faisant réagir, en présence d'un agent d'expansion qui est du dioxyde de carbone formé in situ, un polyisocyanate modifié (A) et un composé (B) contenant des atomes d'hydrogène activés en bout de chaîne, ledit polyisocyanate modifié (A), qui présente une teneur en groupes NCO libres de 10 à 45 % en poids, ayant été obtenu par polymérisation partielle d'un polyisocyanate organique, dont le nombre de fonctions isocyanate par molécule vaut au moins 2, et d'au moins un polyéther-polyol dont la masse molaire moyenne en poids vaut d'environ 500 à environ 8 000 et dont le nombre de fonctions hydroxy par molécule vaut de 2 à 4, et ledit composé (B) comprenant un mélange d'eau et d'au moins un polyéther-polyol obtenu par polycondensation d'oxyde de propylène et, éventuellement, d'oxyde d'éthylène sur des composés (amorceurs) comportant au moins deux atomes d'hydrogène actif, la quantité d'eau étant comprise entre 1 et 8 parties en poids pour 67,5 parties en poids de polyol, et dont la teneur en motifs d'oxyde d'éthylène vaut de 0 à 50 % en poids, le nombre de fonctions hydroxy par molécule vaut de 2 à 4 et le poids d'équivalent par groupe hydroxy terminal vaut de 500 à 2 500, pourvu que, si ledit polyéther-polyol du composé (B) présente une teneur en motifs d'oxyde d'éthylène de 0 à moins de 10 % en poids, son poids d'équivalent vaille de 500 à 2 500, mais si sa teneur en motifs d'oxyde d'éthylène vaut de 10 à 50 % en poids, son poids d'équivalent vaille de 1 000 à 1 500, le rapport du nombre d'équivalents de polyisocyanate modifié (A) au nombre d'équivalents de composé (B) étant compris entre 0,8 et 1,2.

2. Mousses en polyuréthane selon la revendication 1, dans lesquelles le rapport du nombre d'équivalents de polyisocyanate modifié (A) au nombre d'équivalents de composé (B) est compris entre 0,95 et 1,15.

3. Mousses en polyuréthane selon l'une quelconque des revendications 1 à 2, dans lesquelles le polyisocyanate organique est choisi parmi
• les diisocyanates de formule générale (I) :
OCN-R-NCO (I)
dans laquelle R représente un groupe cycloaliphatique ou aromatique en C₅₋₂₅, portant éventuellement des substituants alkyle, et
• des produits à masse molaire moyenne et/ou élevée, présentant divers degrés de condensation, que l'on peut obtenir par phosgénation de condensats aniline-formaldéhyde et qui sont constitués de mélanges de polyméthylène-polyphénylène-polyisocyanates de formule générale (II) : 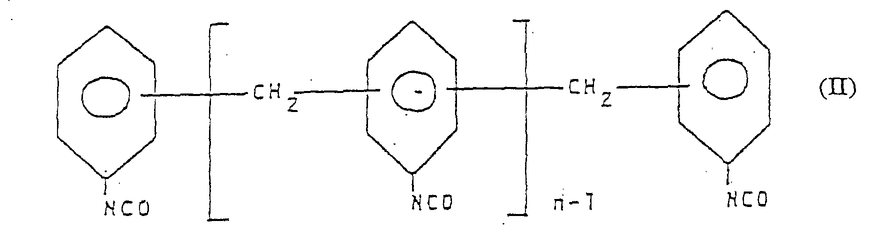 où n vaut au moins 1.

4. Mousses en polyuréthane selon la revendication 3, dans lesquelles ledit polyisocyanate organique est du 2,4-toluène-di-isocyanate, tel quel ou mélangé avec, de préférence, au moins 20 % en poids de son isomère 2,6.

5. Mousses en polyuréthane selon l'une quelconque des revendications précédentes, dans lesquelles les polyéther-polyols utilisés pour la préparation du polyisocyanate modifié (A) ont été obtenus par polycondensation d'oxydes d'oléfines en C₂₋₆ sur des composés comportant au moins deux atomes d'hydrogène actif.

6. Procédé de préparation de mousses en polyuréthane selon l'une quelconque des revendications précédentes, qui comporte :
a) le fait de faire réagir un polyisocyanate de formule générale (I) ou (II) avec au moins un polyéther-polyol dont la masse molaire moyenne en poids vaut d'environ 500 à environ 8 000 et dont le nombre de fonctions hydroxy par molécule vaut de 2 à 4, afin de préparer un polyisocyanate modifié (A) dont la teneur en groupes NCO libres vaut de 10 à 45 % en poids, et
b) le fait de faire réagir le polyisocyanate modifié (A), issu de l'étape (a), avec un composé (B) contenant des atomes d'hydrogène actif en bout de chaîne et comprenant un mélange d'eau et d'au moins un polyéther-polyol obtenu par polycondensation d'oxyde de propylène et, éventuellement, d'oxyde d'éthylène sur des composés (amorceurs) comportant au moins deux atomes d'hydrogène actif, la quantité d'eau étant comprise entre 1 et 8 parties en poids pour 67,5 parties en poids de polyol et ayant une teneur en oxyde d'éthylène comprise entre 0 et 50 % en poids, un nombre de fonctions hydroxyle par molécule compris entre 2 et 4 et un poids d'équivalent par groupe hydroxyle terminal compris entre 500 et 2500, le dioxyde de carbone formé *in situ* jouant le rôle d'agent d'expansion du polyuréthane produit,
pourvu que, si ledit polyéther-polyol du composé (B) présente une teneur en motifs d'oxyde d'éthylène de 0 à moins de 10 % en poids, son poids d'équivalent vaille de 500 à 2 500, mais si sa teneur en motifs d'oxyde d'éthylène vaut de 10 à 50 % en poids, son poids d'équivalent vaille de 1 000 à 1 500, le rapport du nombre d'équivalents de polyisocyanate modifié (A) au nombre d'équivalents de composé (B) étant compris entre 0,8 et 1,2.

7. Procédé selon la revendication 6, dans lequel les réactions de l'étape (a) sont effectuées sans catalyseurs à une température d'environ 50 °C à environ 90 °C, et/ou les réactions de l'étape (b) sont effectuées à la température ambiante et en présence de catalyseurs de type amine et/ou de catalyseurs métalliques, d'agents de régulation de la porosité, de pigments et/ou d'agents de stabilisation vis-à-vis de l'oxydation thermique.

8. Utilisation de mousses en polyuréthane selon l'une quelconque des revendications 1 à 5, dans les industries d'ameublement, de mobilier et de transports.
